# EUROPÄISCHE PATENTSCHRIFT

(11) **EP 1 167 888 B1**
(45) Veröffentlichungstag und Bekanntmachung des Hinweises auf die Patenterteilung: **22.03.2006**
(21) Anmeldenummer: 01114500.0
(22) Anmeldetag: 15.06.2001
(51) Int. Cl.: F24F 5/00, F24D 3/16, F24F 13/24

(54) **Thermisch leitendes Akustikelement und seine Verwendung**
Thermally conductive sound dampening element and its use
Elément conducteur thermique pour l'atténuation du son et son utilisation

(30) Priorität: 23.06.2000 CH 12532000
(43) Veröffentlichungstag der Anmeldung: 02.01.2002
(73) Patentinhaber: ATD-Akustiktherm AG, 8405 Winterthur (CH)
(72) Erfinder: Leibundgut, Hansjürg, 8112 Otelfingen (CH)
(74) Vertreter: Troesch Scheidegger Werner AG

(56) Entgegenhaltungen:
- DE-U- 29 811 631
- US-A- 5 931 381
- PATENT ABSTRACTS OF JAPAN vol. 009, no. 261 (M-422), 18. Oktober 1985 (1985-10-18) -& JP 60 108629 A (TAIKISHIYA:KK), 14. Juni 1985 (1985-06-14)

## Beschreibung

Die vorliegende Erfindung betrifft eine Vorrichtung zur Raumkühlung bzw. -heizung, eine thermisch leitende schallabsorbierende Anordnung zur Raumklimatisierung sowie eine Verwendung zum Klimatisieren von Räumlichkeiten.

Insbesondere bei Bürobauten wird versucht, bei steigenden Komfortansprüchen gleichzeitig den Energieverbrauch zu senken, durch Verwendung von immer mehr künstlicher Intelligenz und durch Integration komplexer Technik im Gebäude selbst. Klimatisierung der Räume und Schalldämmung spielen dabei eine wichtige Rolle, speziell bei Grossraumbüros, Schulungsräumen, Kantinen und dgl.

Mittels der sogenannten autoregulativen Bauweise, mit in Betonböden und Decken eingegossenen Leitungssystemen wird versucht, möglichst auf aufwendige und Energie-intensive Klimaanlagen verzichten zu können, was aber gerade in den oben erwähnten Beispielen, wie Schulungsräumen, nicht immer realisierbar ist, indem zu gewissen Zeiten durch die Anwesenheit einer grösseren Anzahl von Personen das im Beton integrierte Leitungssystem zu träge ist und z.B. eine übermässige Wärmeentwicklung nicht ausgeglichen werden kann. Wohl sind zusätzliche Klimasysteme bekannt, wie beispielsweise Kühldeckenplatten, in welchen mittels in Rohren geführten Kühlmedien eine zusätzliche Kühlung ermöglicht wird. Ein Beispiel hierzu ist die Redeck-Kühldecke der Firma Barcol-Air AG. Diese auf sogenannten Kühlplatten basierende Systeme sind aber eher für konventionelle Bauten gedacht, ohne autoregulative Klimatisierung. Diese zusätzlichen Kühlelemente wirken in bezug auf die unter dem Element liegende Wandung als thermischer Isolator, womit das ggf. im Beton eingelegte Leitungssystem abgeschirmt und inaktiviert wird.

Aus der US-A-5931381 ist eine Vorrichtung zur Raumkühlung bzw. Raumheizung bekannt. Vorgesehen ist ein Leitungssystem für das Führen eines Kühl- bzw. Heizmediums und zwischen dem Leitungssystem und der dem Rauminnern zugewandten Wandung existiert ein wärmeleitender Verbund aufgrund der Kontaktfläche zwischen den beiden Elementen. Hingegen ist zwischen Leitungssystem und beispielsweise einer Betonwandung, wie beispielsweise dem Fussboden, eine Isolation vorgesehen, d. h. die obgenannte Nutzung der Wärme bzw. Kühlkapazität des Gebäudes ist kein Thema.

Es ist daher eine Aufgabe der vorliegenden Erfindung, ein System bzw. eine Anordnung zu schaffen, mit welcher eine Raumklimatisierung ermöglicht wird, wie insbesondere eine zusätzliche Raumklimatisierung in sogenannten autoregulativen Gebäuden oder in bereits bestehenden, nach konventioneller Art klimatisierten bzw. beheizten Gebäuden zum Nachrüsten, ohne die im Stand der Technik bekannten Nachteile.

Erfindungsgemäss wird die gestellte Aufgabe mittels einer Vorrichtung gemäss dem Wortlaut nach Anspruch 1 gelöst.

Vorgeschlagen wird, dass zur Raumkühlung bzw. -heizung ein Leitungssystem für das Führen eines Kühl- bzw. Heizmediums verwendet wird, wobei das Leitungssystem über einen flächigen, gut wärmeleitenden Verbund mit mindestens einer Raumwandung wie einer Betonwand oder Betondecke verbunden ist, und dass zwischen den Leitungen des Leitungssytems flächige Wandpaneele angeordnet sind, welche eine gute thermische Uebertragung von der Wandung an den Raum bzw. umgekehrt gewährleisten.

Bei den flächigen Wandpaneelen handelt es sich vorzugsweise um thermisch leitende, schalldämmende Wand- oder Deckenelemente.

Gemäss einer Ausführungsvariante der erfindungsgemässen Vorrichtung liegt auf der Wandung, wie insbesondere an der Unterseite einer Decke, mit dieser thermisch verbunden mindestens eine gut thermisch leitende Platte bzw. ein Blech direkt auf, mit welcher Platte bzw. welchem Blech mittels mindestens einem thermisch leitenden Befestigungselement das Leitungssystem verbunden ist.

Das oder die Befestigungselemente können kanalartig, klemmenartig, ein Halteprofil aufweisend, etc. ausgebildet sein, für das Aufnehmen bzw. Halten der einzelnen Leitungen des Leitungssystems.

Weiter vorgeschlagen wird eine thermisch leitende, schallabsorbierende Anordnung zur Raumklimatisierung mit einer Vorrichtung der beschriebenen Art, wobei die flächigen Wandpaneele einen schallabsorbierenden Kern aufweisen sowie thermisch leitfähige Uebertragungspfade bzw. sogenannte Wärmebrücken, welche eine flächige, thermische Uebertragung vom Raum an eine Raumwandung oder umgekehrt ermöglichen.

Weitere bevorzugte Ausführungsvarianten der erfindungsgemässen Anordnung sind in den abhängigen Ansprüchen charakterisiert.

Weiter vorgeschlagen wird eine Verwendung der Vorrichtung zum Klimatisieren von Räumlichkeiten, gemäss welchem an oder auf einer Raumwandung, wie beispielsweise einer Betondecke, od. Betonwand, mittels eines Leitungssystems ein Kühl- bzw. Heizmedium geführt wird, und über eine thermische Koppelung an die Wandung, wie die erwähnte Decke, Wärme abgegeben bzw. von der Wandung aufgenommen wird, und dass zwischen den einzelnen Leitungen des Leitungssystems über thermisch leitende Wandpaneele, welche mit der Wandung und gegebenenfalls mit dem Leitungssystem thermisch leitend verbunden sind, Wärme von der Wandung und den Leitungen an den Raum zum Heizen abgegeben wird, bzw. vom Raum aufgenommen und an die Wandung bzw. die Leitungen des Systems zum Kühlen des Raumes übertragen wird.

Die Erfindung wird nun beispielsweise und unter Bezug auf die beigefügten Figuren näher erläutert.

Dabei zeigen:
- Fig. 1: schematisch und im Schnitt die Unterseite einer Raumdecke, aufweisend eine erfindungsgemässe Anordnung zur Raumklimatisierung,
- Fig. 2: analog Fig. 1, schematisch und im Schnitt die Unterseite einer Raumdecke, aufweisend eine spezielle Aus- gestaltung für das Anordnen einer erfindungsgemässen Anordnung für die Raumklimatisierung,
- Fig. 3: schematisch und im Schnitt das Anordnen einer Leitung des Leitungssystems zwischen zwei schallabsorbierenden Deckenpaneelen,
- Fig. 4: analog Fig. 3 eine weitere Ausführungsvariante einer Halterung für eine Leitung des Leitungssystems,
- Fig. 5: schematisch und im Schnitt wiederum analog den Figuren 3 und 4, eine weitere Ausgestaltung eines Befestigungselementes zum Halten einer Leitung des Leitungssytems zwischen zwei schallabsorbierenden Deckenpaneelen,
- Fig. 6: schematisch und im Schnitt eine weitere Ausführungsvariante eines Befestigungselementes zum Halten einer Leitung;
- Fig. 7: schematisch und im Schnitt wiederum eine weitere Ausführungsvariante der Befestigungsart zum Halten einer Leitung zwischen zwei schallabsorbierenden Deckenpaneelen, und
- Fig. 8a und 8b: schematisch und im Schnitt zwei weitere Ausführungsvarianten einer erfindungsgemässen Anordnung im Bereich des Aneinanderstossens zweier schallabsorbierender Deckenelemente sowie ein Befestigungselement für das Halten einer Leitung des Leitungssytems sowie der beiden Deckenelemente.

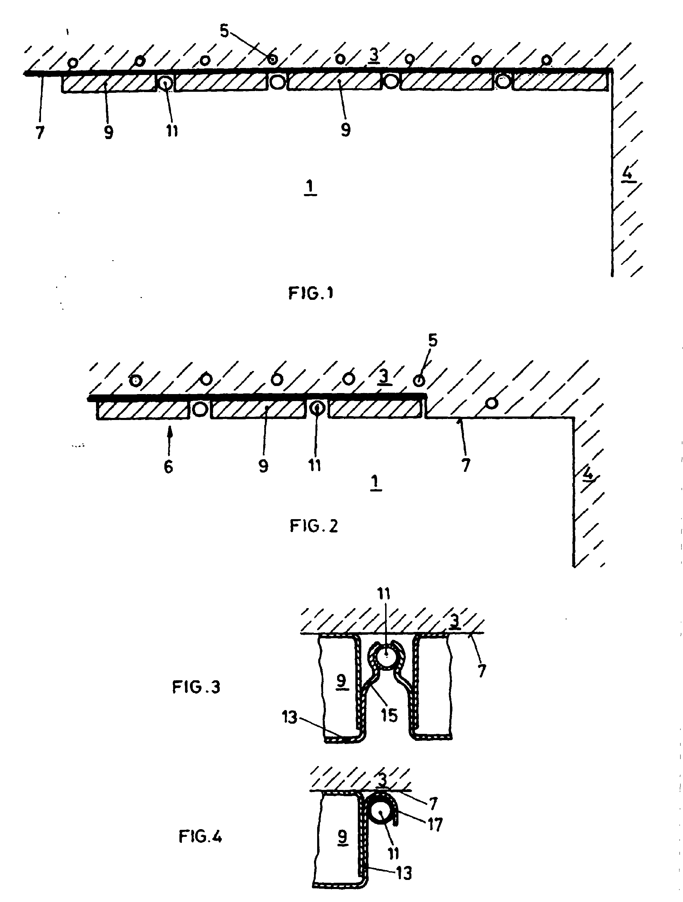

Fig. 1 zeigt im Schnitt einen Raum 1 mit einer Decke 3 sowie einer Seitenwandung 4. Innerhalb der Decke 3, welche beispielsweise aus einer Eisenbetonkonstruktion besteht, sind im Bereich gegen die Deckenunterseite 7 Rohrleitungen 5 eingelegt, zum Führen eines Kühl- oder Heizmediums.

An der Deckenunterseite 7 sind Deckenpaneele 9 angeordnet, bei welchen es sich beispielsweise um schalldämmende Akustikelemente handeln kann, um eine Schalldämmung im Raum 1 zu erzeugen. Dies ist insbesondere in Grossraumbüros, Schulungsräumen, Kantinen und dgl. notwendig, wo im Falle der Anwesenheit einer grösseren Anzahl Personen ein relativ hoher Lärmpegel herrscht, oder aber bei Räumlichkeiten, wie Schulungsräumen, wo eine hohe Schalldämmung notwendig ist.

Erfindungsgemäss wird vorgeschlagen, dass zwischen diesen Deckenpaneelen 9 bzw. Schallabsorber-Paneelen Leitungsrohre 11 angeordnet sind, in welchen ebenfalls ein Heiz- oder Kühlmedium geführt wird. Erfindungswesentlich ist nun, dass diese Leitungsrohre 11 thermisch leitend mit der Decke 3 und/oder den Deckenpaneelen 9 verbunden sind, um einen hohen Wärmeaustausch mit dem Raum 1 zu ermöglichen.

In Fig. 2 ist analog Fig. 1 wiederum im Schnitt ein Raum 1 dargestellt mit der darüber angeordneten Decke 3, wobei der untere Deckenabschluss 7 eine Aussparung 6 aufweist, deren seitliche Abstufung in etwa der Höhe der Deckenpaneelen 9 entspricht, so dass letztere im optischen Erscheinungsbild der Decke verschwinden. Wiederum sind zwischen den Deckenpaneelen, wie Schallabsorberplatten 9, Leitungen 11 angeordnet, zum Führen des Heiz- bzw. Kühlmediums. Wie bereits oben erwähnt, ist es erfindungswesentlich, dass diese Leitungsrohre thermisch mit der Decke 3 und/oder den Deckenpaneelen 9 verbunden sind, so dass ein Wärmetausch mit dem Raum 1 ermöglicht wird. Weiter wesentlich ist, dass die Deckenpaneele, wie schallabsorbierende Akustikelemente 9, ebenfalls eine thermische Verbindung zwischen dem Raum 1 und der Decke 3 ermöglichen, so dass beispielsweise von einem in Rohrleitungen 5 geführten Heizmedium eine Wärmeabgabe über die Deckenpaneele 9 an den Innenraum 1 ermöglicht wird, um diesen zu beheizen.

Wie bereits eingangs erwähnt, werden moderne Bauten mittels eines autoregulativen Klimatisierungssystemes geheizt bzw. gekühlt, d.h. in den Betonwänden und -decken erfolgt im Sommer nachts mittels Kühlwasser eine Abkühlung, um tagsüber die Räume kühlen zu können, bzw. im Winter mittels Heizmedium eine Erwärmung, um tagsüber die Räumlichkeiten zu beheizen. Die Kühlung bzw. Heizung erfolgt deshalb nachts, da beispielsweise mittels ausserhalb des Gebäudes angeordneter Wärmetauscher die relativ kühle Nachtluft genutzt werden kann, währenddem beim Heizen günstige Nachtenergie genutzt werden kann. Speziell bei derartigen sogenannten autoregulativen Gebäuden ist es wesentlich, dass durch schallabsorbierende Deckenpaneelen 9 ein guter thermischer Übergang zum Raum 1 ermöglicht wird, d.h. schallabsorbierende Akustikelemente 9 dürfen nicht als thermischer Isolator wirken. Diese thermische Verbindung ist nun auch wichtig beim erfindungsgemässen Anordnen des zusätzlichen Leitungssystems 11 unterhalb der Unterseite 7 der Decke 3, um eine zusätzliche Beheizung bzw. Kühlung des Raumes 1 zu ermöglichen.

In Fig. 3 ist vergrössert, schematisch und im Schnitt der Bereich des Aneinanderstossens zweier Deckenpaneele 9 an der Unterseite 7 der Decke 3 dargestellt. Diese schallabsorbierenden Deckenelemente 9 weisen eine wärmeleitende Aussenhülle 13 auf, welche beispielsweise aus Kupfer, Aluminium oder einem anderen gut wärmeleitenden Metall bzw. Material bestehen kann. Auf die Ausgestaltung der schallabsorbierenden Akustikelemente 9 soll an dieser Stelle nicht weiter eingegangen werden, da sie aus dem Stand der Technik bestens bekannt sind. Verwiesen sei lediglich beispielsweise auf das thermisch leitende Akustikelement "Akustiktherm" der Fa. Schneider Dämmtechnik AG, 8401 Winterthur, Schweiz.

Wie aus Fig. 3 erkennbar, weist diese Aussenhülle 13 der Deckenpaneele 9 eine klammerartige Auskragung 15 auf, welche derart ausgebildet ist, dass eine Rohrleitung 11 im Zwischenraum zwischen zwei Deckenpaneelen 9 aufgenommen werden kann. Diese Rohrleitungen 11 sind ebenfalls aus einem gut wärmeleitenden Material hergestellt oder derart dünnwandig ausgebildet, dass ein ausreichender thermischer Durchgang gewährleistet ist. Geeignete Materialien sind beispielsweise Kupfer, Aluminium oder generell gut thermisch leitende Metalle, wobei neuerdings auch spezielle faserverstärkte Kunststoffe verwendet werden, welche eine gute thermische Leitfähigkeit aufweisen. Grundsätzlich ist es aber auch möglich, andere geeignete, beispielsweise thermoplastische Kunststoffe zu verwenden, wobei in diesem Fall die Wandstärke derart zu wählen ist, dass der thermische Durchgang durch die Wandung ausreichend ist.

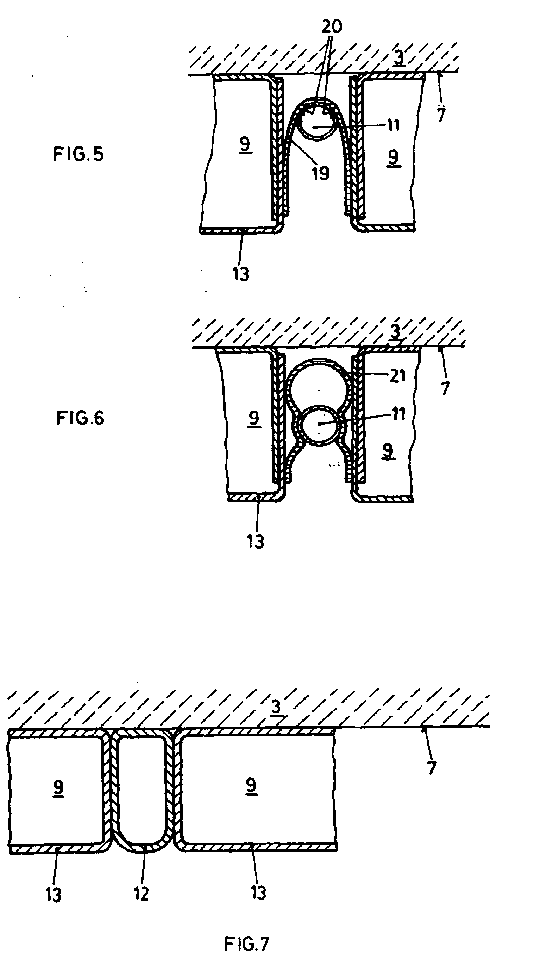

In Fig. 4 ist ein seitlicher Abschluss einer erfindungsgemässen Deckenpaneelen-Anordnung dargestellt, wobei endständig in einer Auskragung 17 der Hülle 13 der Deckenpaneele 9 wiederum eine Rohrleitung 11 angeordnet ist.

Fig. 5 zeigt analog Fig. 3 im Schnitt und schematisch den Zwischenraum zwischen zwei nebeneinander liegenden Deckenpaneelen 9. Die Rohrleitung 11 wird in der Anordnung gemäss Fig. 5 mittels eines klammerartigen Befestigungselements 19 in den Zwischenraum zwischen die beiden Deckenpaneelen klemmend eingefügt, wobei die Rohrleitung mittels Schweissnähten 20, beispielsweise erzeugt mittels Laserschweissen, am klammerartigen Befestigungselement 19 befestigt ist. Aufgrund ausreichender Klemmwirkung des klammerartigen Befestigungselementes an der Aussenhülle 13 der beiden Paneele 9 ergibt sich eine stabile Befestigung des Rohrleitungssystems.

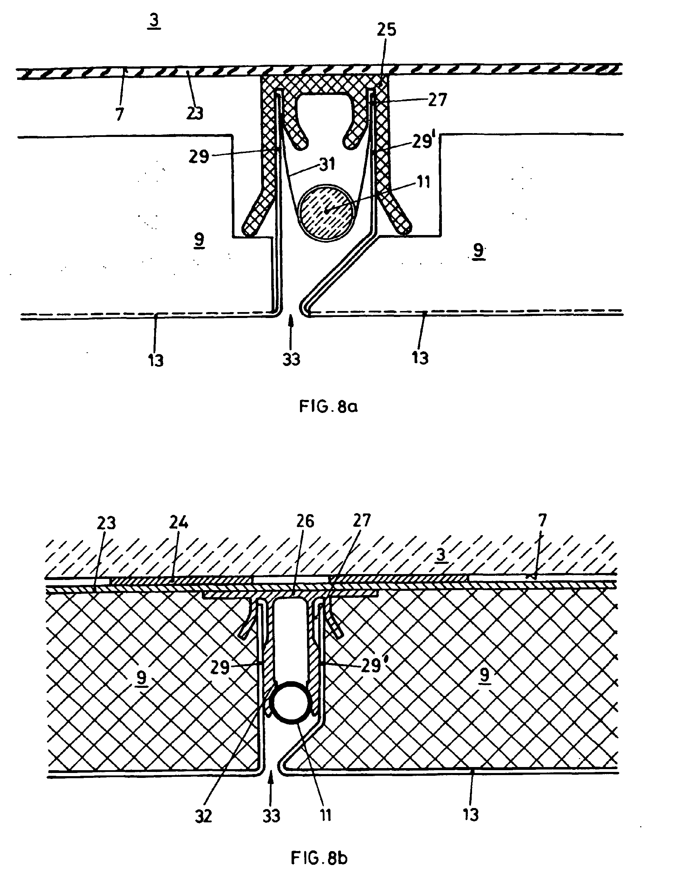

Fig. 6 zeigt denselben Bereich einer erfindungsgemässen Deckenanordnung, wie in Fig. 5 dargestellt, wobei das Befestigungselement 21 in analoger Weise nicht fest, wie beispielsweise über je eine Schweissverbindung, mit der Aussenhülle 13 je der seitlich angeordneten Wandpaneele verbunden ist, sondern wiederum klemmend in den Zwischenraum zwischen die beiden Wandpaneele eingedrückt ist. In diesem klammerartigen Befestigungselement 21 wird wiederum eine Rohrleitung 11 gehalten.

In Fig. 7 ist eine weitere erfindungsgemässe Deckenanordnung schematisch im Schnitt dargestellt, wobei die zwischen zwei Deckenpaneele 9 angeordnete Rohrleitung 12 eine von den vorangehenden Darstellungen abweichende Befestigungstechnik aufweist. Bei der Rohrleitung 12 handelt es sich beispielsweise um einen flexiblen Schlauch, welcher durch Einpressen in den zwischenraum der beiden Deckenpaneele 9 angeordnet wird, wobei es sich beispielsweise um einen flexiblen Schlauch aus einem polymeren Material wie Polyethylen handelt, welcher einerseits eine gewisse Flexibilität bzw. Verformbarkeit aufweist und andererseits einen relativ hohen Oberflächenreibwiderstand aufweist. Dadurch ist gewährleistet, dass nach Eindrücken des Schlauches 12 die Rohrleitung fest an den Aussenhüllen 13 der beiden Wandpaneele 9 haftet und selbst beim Beschicken der Rohrleitung 12 mit dem Kühl- oder Heizmedium ein Ausbrechen der Rohrleitung 12 aus dem Zwischenraum unmöglich ist.

Bei allen Ausschnitten, wie in den Figuren 3 bis 7 dargestellt, ist es nun wesentlich, dass die Rohrleitung 11 wärmeleitend mit der Aussenhülle 13 der seitlich angeordneten Deckenpaneele 9 verbunden ist, wie auch mit der Unterseite 7 der Decke 3, indem die Aussenhülle 13 selbst fest anliegend an der Unterseite 7 angeordnet ist. Damit ergibt sich eine flächige thermische Kopplung zwischen Aussenhülle 13 und der Decke 3.

Fig. 8a und 8b schlussendlich zeigen bevorzugte Ausführungsvarianten der erfindungsgemässen Anordnung. Fig. 8a zeigt an der Unterseite 7 der Decke 3, auf dieser fest aufliegend, eine Metallplatte bzw. ein Metallblech 23. Auf diesem Metallblech 23 und mit diesem fest verbunden ist ein klammerartiges Befestigungselement 25, welches längsausgedehnt kanalartig ausgebildet ist. Dieses Befestigungselement 25 weist seitlich zwei Einkerbungen 27 auf, in welche eingreifend eine vorstehende Kante 29 bzw. 29' je der Aussenhülle 13 der beiden schallabsorbierenden Deckenpaneelen 9 eingestossen bzw. eingeführt werden kann, um einen guten thermischen Übergang von Aussenhülle 13 zum Befestigungselement zu gewährleisten. Damit nun die beiden Deckenpaneelen 9 praktisch abstandslos aneinanderstossend angeordnet werden können, weist das eine der beiden Deckenelemente 9 eine einwärts gebogene Abschlusskante 29' auf, währenddem die andere Abschlusskante 29 gerade ausgebildet ist, womit ein nur geringer Abstand 33 zwischen den beiden Deckenpaneelen bzw. Deckenelementen 9 gebildet wird. Schlussendlich ist wiederum in den beiden Schlitzen 27 gehalten ein Bügelelement 31 eingelassen, in welchem die Rohrleitung 11 gehalten wird.

Anhand von Fig. 8a soll die Funktionsweise der erfindungsgemässen thermisch leitenden, schallabsorbierenden Anordnung zum Raumklimatisieren näher erläutert werden. Im Leitungssystem 11 wird entweder ein Wärmemedium oder ein Kühlmedium geführt, wobei über den wärmeleitenden Bügel 31 ein thermischer Austausch stattfindet mit dem Befestigungselement 25, welches selbstverständlich ebenfalls aus einem thermisch gut leitenden Werkstoff hergestellt ist. Einerseits erfolgt ein thermischer Übergang über das Blech bzw. die Platte 23 zur Decke 3, um diese entweder zu kühlen oder zu beheizen. Andererseits erfolgt ein Wärmeaustausch über die Metallkanten 29 bzw. 29' sowie die thermisch gut leitende Aussenhülle 13 der Deckenelemente 9. So ist es beispielsweise möglich, ein bereits in der Betondecke 3 angeordnetes Kühl- oder Heizsystem zusätzlich zu unterstützen, oder aber bei Fehlen eines entsprechenden Leitungssystemes in der Decke 3 die Funktion des Beheizens bzw. Kühlens vollständig durch das Leitungssystem 11 zu übernehmen. Es ist also durchaus denkbar, die erfindungsgemäss vorgeschlagene Anordnung in bereits bestehenden Gebäuden ohne autoregulatives Klimatisiersystem nachzurüsten, indem Leitungen 11 sowie entsprechend ausgebildete schallabsorbierende Deckenelemente 9 nachträglich an einer Decke oder einer Seitenwandung angeordnet werden. Dies beispielsweise, um ein bereits bestehendes, konventionelles Heiz- oder Kühlsystem zu unterstützen oder mindestens in Übergangsperioden zu ersetzen, da einerseits in der Regel ohnehin schallabsorbierende Deckenelemente anzuordnen sind und es andererseits einleuchtend ist, dass der Energiebedarf der erfindungsgemässen Anordnung wesentlich geringer ist als derjenige von konventionellen Heiz- bzw. Kühlsystemen.

Die Ausführungsvariante gemäss Fig. 8b entspricht weitgehendst derjenigen, dargestellt in Fig. 8a. Wiederum ist das Metallblech 23 an der Unterseite 7 der Decke 3 angeordnet, wobei die Befestigung beispielsweise mittels eines Klebers erfolgt, schematisch dargestellt durch die Klebfuge 24. Selbstverständlich ist es auch möglich, die Metallplatte vollflächig mit der Decke 3 zu verbinden. Beim Kleber 24 kann es sich um einen konventionellen Haftkleber handeln, aufweisend eine gute Haftung sowohl auf Blechen wie auch auf mineralischen Werkstoffen, welcher einen guten thermischen Übergang gewährleistet. Derartige Kleber bzw. Mörtel, welche gut wärmeleitend sind, sind in der Bautechnik bestens bekannt. Der Vorteil der Verwendung eines Klebers liegt auch darin, dass allfällige Unebenheiten an der Deckenunterseite ausgeglichen werden können.
Ein weiterer Unterschied der Anordnung gemäss Fig. 8b zu derjenigen, dargestellt in Fig. 8a ergibt sich durch eine andere Ausgestaltung des Befestigungselementes, in Fig. 8b mit der Referenzzahl 26 versehen. Wohl weist dieses Befestigungselement 26 wiederum Einkerbungen 27 auf, in welche eingestossen vorstehende Kanten 29 bzw. 29' je der Aussenhülle 13 angeordnet sind. Hingegen weist das Befestigungselement 26 zwei klammerartige Schenkel 32 auf, welche einerseits flächig an den beiden vorstehenden Kanten 29 bzw. 29' für einen guten thermischen Austausch anliegen, und im weiteren ist endständig zwischen diesen beiden klammerartigen Schenkeln die Rohrleitung 11 positioniert. Die Gesamtanordnung ist aber wiederum dergestalt, dass der zwischen den beiden Deckenpaneelen 9 entstehende Abstand 33 minim ist, was optisch vorteilhaft sein kann.

Auf die Funktionsweise der Anordnung gemäss Fig. 8b kann verzichtet werden, da diese mit der derjenigen der Anordnung gemäss Fig. 8a übereinstimmt.

Bei den in den Figuren 1 bis 8 dargestellten erfindungsgemässen schallabsorbierenden Akustikelementen mit integrierter Raumklimatisierung handelt es sich selbstverständlich nur um Beispiele zur näheren Erläuterung der vorliegenden Erfindung, und die vorliegende Erfindung ist selbstverständlich nicht auf die Darstellungen der Figuren 1 bis 7 beschränkt. So ist es selbstverständlich möglich, anstelle der beschriebenen schalldämmenden Akustikelemente lediglich die Wärmetauscherfläche vergrössernde Wand- oder Deckenpaneelen anzuordnen, welche thermisch mit der Decke bzw. einer Raum-Seitenwandung und dem Leitungssystem verbunden sind. Auch die insbesondere in den Figuren 3 bis 7 dargestellten Befestigungselemente können beliebig ausgebildet werden, und so ist es beispielsweise auch möglich, das Rohrleitungssystem integral verbunden in oder an der Deckenplatte 23 anzuordnen, beispielsweise indem diese Rohre auf der Platte bzw. dem Blech aufgeschweisst oder thermisch leitend aufgeklebt sind.

Ein gewichtiger Vorteil der erfindungsgemäss beanspruchten Anordnung zur Raumklimatisierung liegt darin, dass sie nebst der Verwendung in sogenannten autoregulativen Gebäuden auch im Sinne eines Nachrüstens verwendet werden kann. So kann dieses Klimatisierungssystem zum Kühlen oder Beheizen sowohl in bereits bestehenden, nach konventioneller Art beheizten bzw. gekühlten Gebäuden verwendet werden oder aber gar in Gebäuden, bei welchen gänzlich irgendwelche klimatisierende Einrichtungen fehlen. So kann die erfindungsgemässe Anordnung beispielsweise in Räumlichkeiten nachgerüstet werden, in welchen weder ein Klimatisierungssystem montiert ist noch irgendwelche Heizelemente. Beispielsweise in älteren Gebäuden oder in Estrichräumlichkeiten, Kellern und dergleichen kann die erfindungsgemässe Klimatisierungsanordnung verwendet werden.

## Patentansprüche

1. Vorrichtung zur Kühlung beziehungsweise Heizung eines Raumes mit mindestens einer Betonwand oder Betondecke (3, 7), aufweisend:
- ein Leitungssystem (11) für das Führen eines Kühlbeziehungsweise Heizmediums,
- einen flächigen gut wärmeleitenden Verbund (13, 15, 17, 19, 21, 23, 24, 29, 31) zwischen dem Leitungssystem (11) und der mindestens einen Betonwand oder Betondecke (3, 7) sowie
- zwischen den Leitungen (11) des Systems angeordnete, flächige Wandpaneele (9), deren eine Oberfläche in wärmeleitendem Verbund mit der Betondecke oder Betonwand (3, 7) steht, und welche an der gegenüberliegenden Oberfläche eine gute thermische Übertragung von der Betonwand oder Betondecke (3, 7) an den Raum (1) gewährleisten,
wobei die Leitungen (11), der flächige gut wärmeleitende Verbund (13, 15, 17, 19, 21, 23, 24, 29, 31) sowie der Verbund von Wandpaneele (9) zur Betonwand oder Betondecke (3, 7) aus einem thermisch leitenden Metall, einem faserverstärktem Kunststoff, aufweisend eine thermische Leitfähigkeit und/oder einem themoplastischen Kunststoff mit einer Wandstärke für eine ausreichenden thermischen Durchgang durch die Wandung bestehen.

2. Vorrichtung nach Anspruch 1, **dadurch gekennzeichnet, dass** es sich bei den flächigen Paneelen (9) um thermisch leitende, schalldämmende Wand- oder Deckenelemente handelt.

3. Vorrichtung, nach einem der Ansprüche 1 oder 2, **dadurch gekennzeichnet, dass** auf der Betonwand oder Betondecke, wie beispielsweise an der Unterseite (7) einer Decke (3) direkt aufliegend und mit dieser thermisch verbunden, mindestens eine gut thermisch leitende Platte bzw. ein Blech (13, 23) angeordnet ist, mit welcher bzw. welchem mittels mindestens einem thermisch leitenden Befestigungselement (15, 17, 19, 21, 25, 26, 31) das Leitungssystem (11) thermisch leitend verbunden ist.

4. Vorrichtung nach Anspruch 3, **dadurch gekennzeichnet, dass** das oder die Befestigungselemente (15, 17, 19, 21, 25, 26, 31) kanalartig, klammerartig, ein Halteprofil aufweisend etc. ausgebildet ist.

5. Vorrichtung nach einem der Ansprüche 1 bis 4, ols thermisch leitende, schallabsorbierende Anordnung zur Raumklimatisierung, **dadurch gekennzeichnet, dass** die flächigen Wandpaneele bzw. Deckenpaneele (9) einen schallabsorbierenden Kern aufweisen sowie thermisch leitfähige Übertragungspfade bzw. sogenannte Wärmebrücken (13, 29, 29'), welche eine flächige thermische Übertragung an die Betonwand oder Betondecke. (3, 7) ermöglichen.

6. Vorrichtung nach Anspruch 5, **dadurch gekennzeichnet, dass** die Wandpaneele wenigstens teilweise eine Aussenhülle (13) aufweisen aus einem thermisch gut leitenden Material.

7. Vorrichtung nach einem der Ansprüche 1 bis 6, **dadurch gekennzeichnet, dass** die Leitungen (11) des Leitungssystems wenigstens teilweise flexibel bzw. deformierbar ausgebildet sind und in deformiert eingedrücktem Zustand fest zwischen zwei flächigen Paneelen (9) eingeklemmt angeordnet sind.

8. Vorrichtung nach einem der Ansprüche 5 bis 7, **dadurch gekennzeichnet, dass** die Befestigungselemente (15, 17, 19, 25, 31) mit den Wandpaneelen (9) verbunden sind bzw. integraler Bestandteil der Wandpaneele (9) und/oder der gut thermisch leitenden Platte bzw. des Bleches (23) sind.

9. Vorrichtung nach einem der Ansprüche 5 bis 8, **dadurch gekennzeichnet, dass** die Befestigungselemente, die Aussenhülle der Wandpaneele, die thermisch gut leitende Platte bzw. das Blech sowie die Leitungsrohre aus einem thermisch gut leitenden Material gefertigt sind, wie Kupfer, Aluminium, einer thermisch gut leitenden Metalllegierung oder aus einem thermisch gut leitenden Verbundmaterial, wie beispielsweise einem faserverstärkten Polymer, oder durch Ausbilden einer geringen Rohrwandstärke einen mindestens ausreichend thermischen Übergang ermöglichen.

10. Vorrichtung nach einem der Ansprüche 5 bis 9, **dadurch gekennzeichnet, dass** an der Betonwand bzw. der Betondecke (3, 7), mit dieser fest verbunden, mindestens eine flächige, thermisch gut leitende Platte bzw. ein Blech (13, 23) angeordnet ist, an dieser bzw. an diesem befestigt und mit dieser bzw. diesem thermisch leitend verbunden Befestigungselemente angeordnet sind (25), in welche oder an welchen das Leitungssystem (11) für das Führen des Kühl- oder Heizmediums sowie die Wandpaneele (9) gehalten sind, derart, dass ein guter thermischer Verbund zwischen Leitungssystem und der Betonwand od. (3, 7) und Betondecke oder der Wandpaneele (9) und dem Raum gewährleistet ist.

11. Verwendung der Vorrichtung nach einem der Ansprüche 1 bis 10 zum Klimatisieren von Räumlichkeiten, **dadurch gekennzeichnet, dass** an oder auf einer Betonwand oder Betondecke mittels eines Leistungssystems ein Kühl- bzw. Heizmedium geführt wird und über eine thermische Kopplung an die Betonwand oder Betondecke Wärme abgegeben bzw. von dieser aufgenommen wird, und dass zwischen den einzelnen Leitungen des Systems über thermisch leitende Wandpaneele, welche mit der Betonwand oder Betondecke und gegebenenfalls mit dem Leitungssystem thermisch leitend verbunden sind, Wärme von der Betonwand oder Betondecke und den Leitungen an den Raum zum Heizen abgegeben bzw. vom Raum aufgenommen und an die Betonwand oder Betondecke und die Leitung zum Kühlen des Raumes übertragen wird.

## Claims

1. Device for cooling or heating a room with at least one concrete wall or concrete ceiling (3, 7) having:
- a line system (11) for transporting a cooling or heating medium,
- a highly thermally conductive connection (13, 15, 17, 19, 21, 23, 24, 29, 31) over a laminar area between the line system (11) and the at least one concrete wall or ceiling (3,7) and
- arranged between the lines (11) of the system, flat wall panels (9), the one surface of which is thermally conductively connected with the concrete ceiling or wall (3, 7) and which on the opposite surface guarantee a good thermal transfer from the concrete wall or ceiling (3, 7) to the room (1),
the lines (11), the highly thermally conductive connection (13, 15, 17, 19, 21, 23, 24, 29, 31) over a laminar area and the connection of the wall panels (9) to the concrete wall or concrete ceiling (3, 7) consisting of a thermally conductive metal, a fibre-reinforced plastic with good thermal conductivity and/or a thermoplastic plastics with a wall thickness for a sufficient thermal transfer through the wall.

2. Device according to claim 1, **characterised in that** the flat panels (9) are thermally conductive, sound-insulating wall or ceiling elements.

3. Device according to one of claims 1 or 2, **characterised in that** on the concrete wall or ceiling, for example lying directly on the underside (7) of a ceiling (3) and thermally connected therewith, is arranged at least one highly thermally conductive panel or plate (13, 23) with which the line system (11) is thermally conductively connected by means of at least one thermally conductive fixing element (15, 17, 19, 21, 25, 26, 31).

4. Device according to claim 3, **characterised in that** the fixing element or elements (15, 17, 19, 21, 25, 26, 31) are designed channel-like, clip-like. with a retaining profile etc.

5. Device according to any of claims I to 4 as a thermally conductive, sound- absorbing arrangement for room air conditioning, **characterised in that** the flat wall panels or ceiling panels (9) have a sound-absorbing core and thermally conductive transfer paths or heat bridges (13, 29, 29') which allow a thermal transfer to the concrete wall or ceiling (3, 7) over a laminar area.

6. Device according to claim 5, **characterised in that** the wall panels at least partly have an outer shell (13) of a thermally conductive material.

7. Device according to any of claims 1 to 6, **characterised in that** the lines (11) of the line system are formed at least partly flexible or deformable and in deformed compressed state can be clamped firmly between two flat panels (9).

8. Device according to any of claims 5 to 7, **characterised in that** the fixing elements (15, 17, 19, 25, 31) are connected with the wall panels (9) or are integral components of the wall panels (9) and/or the highly thermally conductive panel or plate (23).

9. Device according to any of claims 5 to 8, **characterised in that** the fixing elements, the outer sleeve of the wall panels, the highly thermally conductive panel or plate and the pipes are made of thermally conductive material such as copper, aluminium, a highly thermally conductive metal alloy or a highly thermally conductive composite material such as for example a fibre-reinforced polymer, or allow an at least adequate thermal transfer by the formation of a small pipe wall thickness.

10. Device according to any of claims 5 to 9, **characterised in that** on the concrete wall or concrete ceiling (3, 7) and thermally connected therewith is arranged at least one flat, thermally conductive panel or plate (13, 23), attached to this and thermally conductively connected therewith are arranged fixing elements (25) in or on which are held the line system (11) for transporting the cooling or hearing medium and the wall panels (9) such that a good thermal connection is guaranteed between the line system and the concrete wall or ceiling (3, 7) and/or the wall panels (9) and the room.

11. Use of the device according to any of claims 1 to 10 for air conditioning of buildings, **characterised in that** a cooling or heating medium is transported on or at a concrete wall or concrete ceiling by means of a line system, and via a thermal coupling to the concrete wall or ceiling heat is emitted or absorbed thereby, and that between the individual lines of the system via thermally conductive wall panels that are connected thermally conductively with the concrete wall or concrete ceiling and where applicable the line system, heat is emitted by the concrete wall or concrete ceiling and the lines to heat the room or absorbed from the room and transferred to the concrete wall or ceiling and lines to cool the room.

## Revendications

1. Dispositif pour refroidir ou chauffer une pièce avec au moins un mur en béton ou un plafond en béton (3, 7), comprenant :
- un système de canalisations (11) pour le passage d'un agent réfrigérant ou chauffant,
- une liaison plate et bonne conductrice de chaleur (13, 15, 17, 19, 21, 23, 24, 29, 31) entre le système de canalisations (11) et le ou les murs ou plafonds en béton (3, 7), et
- des panneaux muraux plats (9) qui sont disposés entre les canalisations (11) du système, dont une surface est reliée par une liaison conductrice de chaleur au plafond ou au mur en béton (3, 7) et qui garantissent sur la surface opposée une bonne transmission thermique du mur ou du plafond en béton (3, 7) vers la pièce (1),
les canalisations (11), la liaison plate bonne conductrice de chaleur (13, 15, 17, 19, 21, 23, 24, 29, 31) et la liaison entre les panneaux muraux (9) et le mur ou le plafond en béton (3, 7) se composant d'un métal conducteur de chaleur, d'une matière plastique renforcée par des fibres et présentant une conductibilité thermique, et/ou d'une matière thermoplastique avec une épaisseur de paroi pour un passage thermique suffisant à travers la paroi.

2. Dispositif selon la revendication 1, **caractérisé en ce que** les panneaux plats (9) sont constitués par des éléments de paroi ou de plafond conducteurs de chaleur et insonorisants.

3. Dispositif selon la revendication 1 ou 2, **caractérisé en ce qu'**il est prévu sur le mur ou le plafond en béton, par exemple sur le côté inférieur (7) d'un plafond (3), au moins une plaque ou une tôle bonne conductrice de chaleur (13, 23) qui est posée directement sur ledit côté inférieur (7), qui est reliée thermiquement à celui-ci et à laquelle le système de canalisations (11) est relié par une liaison conductrice de chaleur à l'aide d'un élément de fixation conducteur de chaleur (15, 17, 19, 21, 25, 26, 31).

4. Dispositif selon la revendication 3, **caractérisé en ce que** le ou les éléments de fixation (15, 17, 19, 21, 25, 26, 31) ont la forme de conduits, de crampons, ou comportent un profilé de fixation, etc.

5. Dispositif selon l'une des revendications 1 à 4, comme installation conductrice de chaleur et insonorisante pour la climatisation d'une pièce, **caractérisé en ce que** les panneaux muraux ou panneaux de plafond plats (9) comportent un coeur insonorisant ainsi que des voies de transmission conductrices de chaleur ou ce qu'on appelle des ponts thermiques (13, 29, 29') qui permettent un transfert thermique plan au mur ou au plafond en béton (3, 7).

6. Dispositif selon la revendication 5, **caractérisé en ce que** les panneaux muraux comportent au moins en partie une enveloppe extérieure (13) en matière bonne conductrice de chaleur.

7. Dispositif selon l'une des revendications 1 à 6, **caractérisé en ce que** les canalisations (11) du système de canalisations sont au moins partiellement flexibles ou déformables et, en position enfoncée et déformée, sont serrées solidement entre deux panneaux plats (9).

8. Dispositif selon l'une des revendications 5 à 7, **caractérisé en ce que** les éléments de fixation (15, 17, 19, 25, 31) sont reliés aux panneaux muraux (9) et font partie intégrante de ceux-ci et/ou de la plaque ou de la tôle bonne conductrice de chaleur (23).

9. Dispositif selon l'une des revendications 5 à 8, **caractérisé en ce que** les éléments de fixation, l'enveloppe extérieure des panneaux muraux, la plaque ou la tôle bonne conductrice de chaleur et les tuyaux se composent d'une matière bonne conductrice de chaleur comme le cuivre, l'aluminium, un alliage métallique bon conducteur de chaleur ou une matière composite bonne conductrice de chaleur comme par exemple un polymère renforcé par des fibres, ou permettent un transfert thermique au moins suffisant grâce à la formation d'une épaisseur de paroi de tuyau faible.

10. Dispositif selon l'une des revendications 5 à 9, **caractérisé en ce qu'**on prévoit sur le mur ou le plafond en béton (3, 7), reliée solidement à celui-ci, au moins une plaque plate ou une tôle bonne conductrice de chaleur (13, 23), et on prévoit, fixés sur celle-ci et présentant avec celle-ci une liaison conductrice de chaleur, des éléments de fixation (25) dans lesquels ou sur lesquels le système de canalisations (11) pour le passage de l'agent réfrigérant ou chauffant et les panneaux muraux (9) sont fixés, de telle sorte qu'une bonne liaison thermique est garantie entre le système de canalisations et le mur ou le plafond en béton (3, 7) et/ou les panneaux muraux (9) et la pièce.

11. Utilisation du dispositif selon l'une des revendications 1 à 10 pour climatiser des locaux, **caractérisée en ce qu'**un agent réfrigérant ou chauffant passe contre ou sur un mur ou un plafond en béton grâce à un système de canalisations, et de la chaleur est dégagée vers le mur ou le plafond en béton ou est extraite de celui-ci grâce à un couplage thermique, et **en ce qu'**entre les différentes canalisations du système, grâce à des panneaux muraux conducteurs de chaleur qui sont reliés de manière conductrice de chaleur au mur ou au plafond en béton et éventuellement au système de canalisations, de la chaleur est dégagée par le mur ou le plafond en béton et par les canalisations vers la pièce, pour la chauffer, ou est extraite de la pièce et est transmise au mur ou au plafond en béton et à la canalisation pour refroidir la pièce.
